# EUROPÄISCHE PATENTSCHRIFT

(11) **EP 0 421 136 B1**
(45) Veröffentlichungstag und Bekanntmachung des Hinweises auf die Patenterteilung: **02.03.1994**
(21) Anmeldenummer: 90117053.0
(22) Anmeldetag: 05.09.1990
(51) Int. Cl.: B29C 45/44, B22D 17/22

(54) **Druckgussformteil**
Injection mould
Moule d'injection

(30) Priorität: 05.10.1989 DE 8911864 U; 12.04.1990 DE 4011784
(43) Veröffentlichungstag der Anmeldung: 10.04.1991
(73) Patentinhaber: Verwaltungsgesellschaft Geiger Plastic GmbH & Co. KG, D-82467 Garmisch-Partenkirchen (DE)
(72) Erfinder: Pfannkuchen, Ernst, D-8104 Grainau (DE)
(74) Vertreter: Huss, Carl-Hans, Dipl.-Ing.

(56) Entgegenhaltungen:
- DE-A- 2 612 151
- FR-A- 889 742
- US-A- 4 412 806
- SOVIET INVENTIONS ILLUSTRATED Sektion A, Woche 9002, 21. Februar 1990 DerwentPublications Ltd., London
- PATENT ABSTRACTS OF JAPAN vol. 5, no. 90 (M-73)(762) 12. Juni 1981& JP-A-56 038 238 (TOSHIBA KIKAI )

## Beschreibung

In der Technik der Herstellung von Gegenständen im Drucknußverfahren wird meist schon bei der Konstruktion der herzustellenden Teile und, darauf aufbauend, bei der Konstruktion der Druckoußformen Wert darauf gelent, mit möglichst nur einer Formtrennebene auszukommen, um beim Auseinanderfahren der Formteile den hergestellten Gegenstand leicht der geöffneten Form entnehmen zu können. Falls dies nicht möglich ist, versucht man mit wenig Trennebenen auszukommen, d.h. die Druckgußform aus möglichst wenigen Teilen zusammenzusetzen. So kann beispielsweise eine vierteilige Form eingesetzt werden, von der beim Formöffnen zwei Teile horizontal und die restlichen zwei vertikal auseinandergefahren werden. Wo auch dies nicht möglich ist, z.B. wenn der herzustellende Gegenstand außerhalb von Formtrennehenen Vorsprünge, wie z.B. Stutzen, aufweist, muß mit in die Form integrierten Schiebern gearbeitet werden, die entweder vor dem Öffnen der eigentlichen Form oder beim Formöffnen zwangsgesteuert gezogen werden.

Derartige Schieber verteuern eine Druckgußform nicht unwesentlich. Außerdem können sie auch dort nicht eingesetzt bzw. untergebracht werden, wo mehrere Vorsprünge mit Hinterschneidungen, z.B. Stutzen mit Flanschen, Wülsten, Gewinden und dgl. außerhalb von Formtrennebenen konstruktionsbedingt verhältnismäßig dicht beieinander liegen.

Für solche Fälle ist es z.B. durch die DE-A-26 12 151 bekannt, in die Drucknußform an der den zu spritzenden Stutzen o. dgl. Vorsprung aufweisende Stelle einen im Prinzip zangenartig ausgebildeten Formzusatzteil einzusetzen. Er besteht aus einer in eine Bohrung eines Formteils eingesetzten Hülse, die in sich einen in einer Ebene getrennten und somit aus zwei Segmenten zusammengesetzten zylindrischen Formbacken aufnimmt, dessen freies Ende das Formnest für den anzuspritzenden Vorsprung, z.B. Stutzen mit Flanschen, enthält. Der geteilte Formbacken ist relativ zur Hülse oder die Hülse gegenüber dem Formbacken verschiebbar. Befindet sich der Formbacken ganz in der Hülse, werden seine beiden Segmente durch diese zusammengepreßt und bilden die Teilspritzform, befindet sich dagegen der das Formnest aufweisende äußere Teil außerhalb der Hülse bzw. wird von dieser nicht mehr zusammengehalten, kann dieser Teil auseinanderspreizen und der angeformte Vorsprung o. dgl. entformt werden.

Das Auseinanderspreizen der Formbackensegmente wird durch einen mit der diese aufnehmenden Hülse fest verbundenen, senkrecht zur Hülsen- bzw. Formbackenachse liegende Steuerstift im Zusammenwirken mit den Schrägflächen eines von den Formbacken umschlossenen Hohlraumes bewirkt. Diese Schrägflächen divergieren in Richtung auf die Formnestteile der Segmente, so daß bei in dieses Richtung vorgeschobener Hülse der Steuerstift die Schrägflächen nicht berührt, während er bei der Verschiebung in umgekehrter Richtung diese auseinanderdrückt und damit die Segmente auseinanderspreizt.

Diese Art der Steuerung des Schließens und Auseinanderspreizens läßt nur eine zweiteilige, also aus nur zwei Segmenten bestehende Formbacke zu, und dies wiederum bedeutet, daß diese für die Freigabe des gespritzten Teils, also für dessen Entformung, verhältnismäßig weit auseinandergespreizt werden müssen, d.h. für die Entformung ihren gemeinsamen Außendurchmesser verhältnismäßig stark vergrößern müssen, bzw. viel Platz benötigen. Dies wird als Nachteil vor allem dort angesehen, wo gerade ein solches Formzusatzteil die sonst gebräuchlichen Formschieber ersetzen soll, nämlich dort, wo mehrere derartige zu spritzende Vorsprünge in einer Formtrennebene verhältnismäßig dicht beieinander stehen.

Eine Verbesserung gegenüber der Formbackenausführung für die Herstellung von mit Flanschen, Wülsten und dgl. versehenen Vorsprünge nach der DE-A-26 12 151 stellt die Ausführung nach der SU-A-14 70 551 dar, weil bei ihr mehr als zwei Formbackensegmente um einen zentralen in ihrer gemeinsamen Achse liegenden Steuerstift gelagert werden können, deren das Formnest enthaltenden Teile beim Öffnen und Freigeben des angespritzten Teils weniger Platz beanspruchen, als wenn die Formbacken nur aus zwei Segmenten zusammengesetzt wären. Es wird aber bei dieser Ausführung der komplizierte Aufbau und ihre aufwendige Herstellung als nachteilig angesehen. Die Segmente sind nämlich etwa in ihrer Mitte auf einem das freie Ende eines Steuerstifts bildenden Kugelkopf gelagert, was sowohl die relativ aufwendige Herstellung des Kugelkopfs als auch die feinmechanisch genaue Herstellung der kugelkalottenförmigen Lagerung in den Segmenten voraussetzt. Außerdem liegen ebenso wie bei der Ausführung nach der DE-A-26 12 151 die das Zusammenfahren (formen) und Auseinanderspreizen (entformen) der Segmente steuernden an dem den Formnesten gegenüberliegenden Ende der Segmente angeordneten Flügel rechtwinklin zur Achse der Segmente, was unterschiedliche Durchmesser der die Segmente aufnehmenden Bohrung für das Öffnen und Schließen der Formbacken bedingt. Ferner ist die Lagerung der Segmente am Kugelkopf des Steuerstiftes so angeordnet, daß für einen bestimmten Außendurchmesser der das Formnest enthaltenden Segmentbacken beim Öffnen ein verhältnismäßig großer Spreizwinkel der Segmente erforderlich wird, und schließlich kann bei einer solchen Ausführung mit Kugelkopf die freie Stirnfläche des Steuerstiftes nicht einen Teil des geschlossenen Formnestes bilden, was für viele Spritzteile zweckmäßig ist.

Hierzu setzt die Erfindung ein, der die Aufgabe zugrunde lag, mit einem sehr einfach aufgebauten Druckgußformteil, der einfach an einer Form angebracht werden kann und die Formung und einfache Entformung von Vorsprüngen, insbesondere von mehreren dicht nebeneinander liegenden Vorsprüngen, an einem Werkstück erlaubt, einen Formteil nach der SU-A-14 70 551 zu verbessern. Diese Aufgabe löst der Erfindung, die für die Herstellung von Gegenständen aus Kunststoff entwickelt wurde und deren nachfolgende Beschreibung sich darauf bezieht, die aber auch für die Herstellung von Gegenständen aus Metall, z.B. Aluminium, eingesetzt werden kann, mit den im Anspruch 1 definierten Mitteln. Zweckmäßige Ausgestaltungen der Erfindung sind in den Ansprüchen 2 bis 5 beschrieben. Die Erfindung ist in den Zeichnungenan zwei keinen Anspruch auf Vollständigkeit erhebenden Ausführungsbeispielen veranschaulicht und anhand dieser nachfolgend beschrieben.

Es stellen dar:
- Fig. 1: einen Vertikalschritt durch den Gegenstand der Erfindung in der Druckgußphase,
- Fig. 2: den Gegenstand der Fig. 1 in der Entformungsphase,
- Fig. 3: eine vereinfachte Ausführungsform eines erfindungsgemäßen Druckgußformteils in der Druckgußphase,
- Fig. 4: den Gegenstand der Fig. 3 in der Entformungsphase.

1 ist ein Druckoußteil mit einem außerhalb einer Formtrennebene liegenden Anschlußstutzen 2, der in einem Flansch 3 endet. Mit 4a ist ein Formteil und mit 4b der Gegenformteil für die Formung der Wand 5 des Druckgußteils 1 bezeichnet, d.h. in den zwischen 4a und 4b freibleibenden Spalten fließt beim Druckgußvorgang der verflüssigte Kunststoff ein und bildet so das Werkstück 1.

Bei einer Ausbildung der erfindungsgemäßen Formteils als nachträglich in eine bestehende Druckgußform einbaubarer Zusatzteil ist in einer Bohrung 6 im Formteil 4a ein allgemein mit 7 bezeichneter Bauteil für die Formung und Entformung des Anschlußstutzens 2 mit Flansch 3 eingesetzt. Dieser besteht aus einer Außenhülse 8, in die eine Gleithülse 9 und im Anschluß an diese und achsgleich mit ihr eine Steuerhülse 10 passend eingesetzt sind. Die Gleithülse 9 nimmt in ihrer Achse einen Steuerstift 11 auf, auf dem die Gleithülse 9 in Pfeilrichtung A-B oder umgekehrt in der Gleithülse 9 verschiebbar ist, während die Steuerhülse 10 den eigentlichen Formteil 12 für die Formung des Stutzens 2 aufnimmt.

Dieser eigentliche Formteil 12 ist aus mehr als zwei Segmenten 13, z.B. vier Segmenten, zusammengesetzt, von denen die beiden Segmente 13' und 13'' in der Zeichnung sichtbar sind.

Diese bilden an einem Ende mit Formbacken 14 das Formnest für den Stutzen oder dergl. Vorsprünge und weisen am gegenüberliegenden Ende im flachen Winkel nach außen abstehende Flügel 15 auf, d.h. die Flügel 15 schließen mit den zwischen ihnen und den Formbacken 14 liegenden Schaftteilen einen stumpfen Winkel ein bzw. mit der Mittelachse des Stiftes 11 einen Winkel wesentlich geringer als 90^{o}. Die Flügel 15 können auf nachfolgend beschriebene Weise mit einem umlaufenden Steuerwulst 16 in der Hülse 10 zusammenwirken. Außerdem sind die Segmente 13 im Übergangsbereich zwischen den Schäften 17 und den Flügeln 15 mit einer gemeinsamen umlaufenden Ringrille 18 durch einen Ringwulst 19 am Steuerstift 11 gehalten.

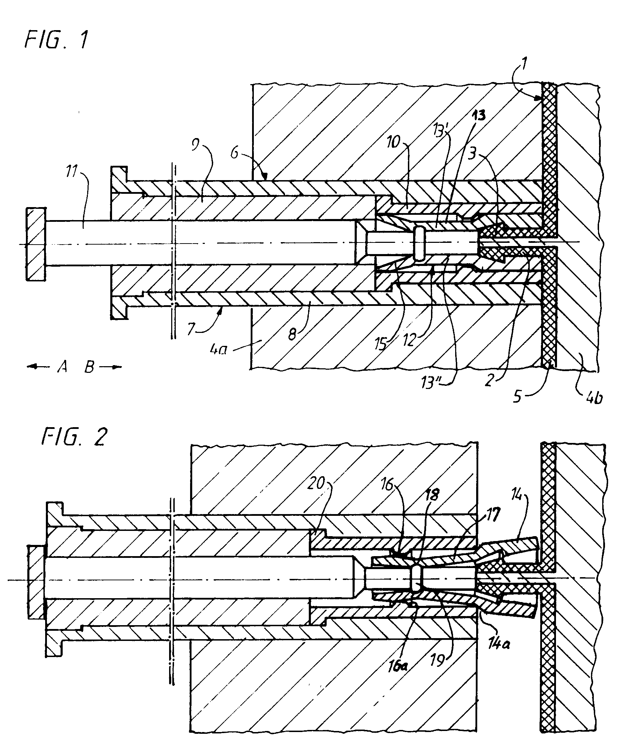

Der Ringwulst 19 ist sehr einfach an dem Steuerstift 11 anzubringen, ebenso wie die Ringrille 18 leicht in die Segmente 13 eingearbeitet werden kann, ohne daß auf besondere Genauigkeit geachtet werden müßte und ohne daß dadurch die Lagerung der Segmente 13 an dem Steuerstift und die Verschiebbarkeit der Segmente 13 mit dem Stift, falls dieser bewegt werden soll, beeinträchtigt würde. Durch die verhältnismäßig weit von den Formbacken 14 entfernte Lagerung 18-19 der Segmente 13 am Steuerstift kann der Spreizwinkel der Segmente gering gehalten werden, d.h. bei gleichem Öffnungsdurchmesser der Formbacken 14 (Fig. 2) müssen die Segmente 13 weniger gespreizt werden als bei einer Lagerung, die mehr zur Mitte hin verlegt ist oder sich in dieser befindet.

Wie Fig.1 veranschaulicht, kann der über den Ringwulst 19 hinaus verlängerten Stueuerstift 11 bei geschlossenen Backen einen Teil des Formnestes bilden, z.B. zur Formung der Stirnfläche des anzuspritzenden Teiles 2-3 herangezogen werden.

Die Steuerhülse 10 kann mit einem Flansch 20 zwischen einem inneren Ringabsatz der Außenhülse 8 und der Gleithülse 9 eingespannt sein. Wenn der Steuerwulst 16 formbackenseitio eine umlaufende Schrägfläche 16a aufweist und die Segmente 13 innenseitig in entsprechenden Schrägflächen 14a enden, wird sich beim Formschließvorgang die Schrägfläche 14a gegen die Schrägfläche 16a anlegen und damit eine weitere Verschiebung der Backen 14 und somit deren Verkeilung verhindern.

Wird nach dem Drucknußvorgang der Formteil 4a in Pfeilrichtung A zum Öffnen der Form zurückgezogen, macht der erfindungsgemäße Druckgußformteil 7 diese Bewegung mit. Wenn dabei der Steuerstift 11 festgehalten wird, so verschiebt sich die Steuerhülse 10 in der Zeichnung so weit nach links, bis der Steuerwulst 16 gegen die flach abgewinkelten Flügel 15 der Segmente 13 anläuft und dann diese nach unten gegen den Steuerstift drückt, wodurch die den geformten Vorsprung 2 aufnehmenden Segmentbacken 14 tulpenförmig auseinandergehen und somit den eingeformten Vorsprung, z.B. Stutzen 2, freigeben.

Man kann aber auch bei stehenbleibendem Steuerstift 11 mittels eines Bewegungsmechanismus, z.B. einem Hydraulikmotor, die Hülsen 8, 9 und 10 aus der Bohrung 6 in Pfeilrichtung A ziehen, wodurch die gleiche Wirkung eintritt.

Schließlich kann auch bei einer Öffnungsbewegung des Formteils 4b in Pfeilrichtung 8 der Steuerstift 11 in gleicher Richtung bewegt werden, der dabei die Segmente 13 mitnimmt, bis deren Flügel 15 gegen die Wulst 16 anlaufen und die Formbacken 14 öffnen.

Der Steuerwulst 16 kann auch in die Bohrung 6 direkt eingeformt werden, d.h. zumindest die Hülsen 9 und 10 können entfallen. Herstellungsmäßig ist das nicht schwierig und wird vor allem in Frage kommen, wenn der erfindungsgemäße Formteil in eine neue Spritzgußform eingearbeitet werden soll.

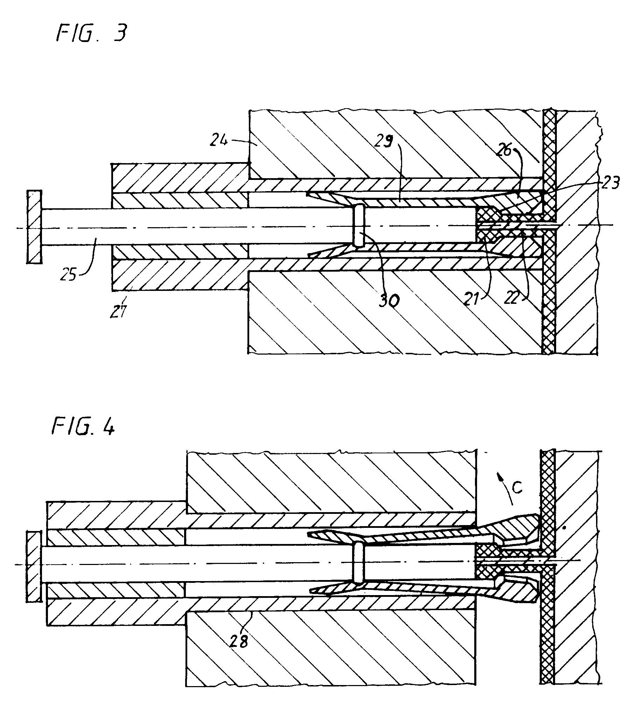

Wenn der auszuformende Vorsprung am Spritzgußteil so geformt ist, daß er bzw. Flächen an ihm beim Zurückziehen des Formteils nach genügender Verfestigung eine Kraft auf entsprechende Flächen der Backen der Segmente ausüben, kann gemäß den Fig. 3 und 4 auf eine Zwangssteuerung durch einen Steuerwulst 16 und damit auch bei einem nachträglich einzubauenden Zusatzteil auf eine Steuerhülse 10 verzichtet werden.

Bei dem Beispiel der Fig. 3 und 4 ist der Flansch 21 des Stutzens 22 so geformt, daß seine Innenfläche 23 bei einer Relativbewegung zwischen dem Formteil 24 und dem Gleitstift 25 eine die Formbacken 26 in Pfeilrichtung C auseinanderspreizende Kraft ausübt, wodurch die direkt in der Außenhülse 27 - oder direkt in der Bohrung 28 - unternebrachten Segmente 29 um den Haltewulst 30 schwenken und den angeformten Stutzen 22 freigeben.

Selbstverständlich können auch mehrere erfindungsgemäße Druckoußformteile zu einem Block zusammengefaßt werden, wobei sowohl durch Zwangssteuerung nach den Fig. 1 und 2 als auch selbsttätig entformbare Teile nach den Fig. 3 und 4 mit einem Block ausgeformt werden können. So können z.B. die Formzusatzteile für zwei in einer Ebene dicht nebeneinander liegende Stutzen und für zwei weitere tiefer liegende Stutzen in einem Block zusammengefaßt werden.

Die Druckgußformteile nach der Erfindung lassen sich auch einfach in bestehende Formen einbringen, d.h. vorhandene Formen können, wenn man an dem durch diese zu formenden Kunststoffteil ein oder mehrere Stutzen anzubringen hat oder die in der Form vorhandenen Schieber sich nicht bewähre haben, leicht umgerüstet werden.

## Patentansprüche

1. Druckgußformteil für die Herstellung von mit Flanschen, Wülsten, Gewinden, Hinterschneidungen und dergleichen versehenen Vorsprüngen, insbesondere Stutzen, an einem Werkstück aus Kunststoff oder Metall, wenn die Vorsprünge außerhalb einer Formtrennebene liegen, bestehend aus im Druckgußzustand in einer Bohrung aufgenommenen und zusammengehaltenen Segmenten (13,29) mit in diesem Zustand ein Formnest bildenden Formbacken (14), sich an diese anschließenden Schaftteilen (17) und sich an diese anschliessenden nach außen abgewinkelten Flügeln (15), welche Segmente an einem zentralen Steuerstift (11) derart schwenkbar gelagert sind, daß sie sich bei einer Relativbewegung zwischen Steuerstift (11) und Bohrung tulpenförmig öffnen, dadurch **gekennzeichnet,** daß die Schaftteile (17) der Segmente (13,29) mit den Flügeln (15) einen stumpfen Winkel einschließen und im Übergangsbereich zwischen den Schaftteilen (17) und Flügeln (15) die Schwenklagerung der Segmente (13,29) liegt, die aus einer Ringwulst (19) an dem über die Schwenklagerung hinaus verlängerten Steuerstift (11) und einer entsprechenden Ringrille (18) in den Segmenten (13,29) besteht.

2. Druckgußformteil nach dem Anspruch 1, dadurch **gekennzeichnet,** daß er als in eine Bohrung (6) in einen Formteil (4a) einsetzbarer Zusatzteil ausgebildet ist, und hierzu die Segmente (13,29) in einer sie führenden und zusammenhaltenden Hülse (8,27) aufgenommen sind.

3. Druckgußformteil nach den Ansprüchen 1 und 2, dadurch **gekennzeichnet,** daß die Segmente (13) in einer in die Hülse (8) eingesetzten Steuerhülse (10) aufgenommen sind.

4. Druckgußformteil nach den Ansprüchen 1 bis 3, dadurch **gekennzeichnet,** daß in der die Segmente (13) aufnehmenden Bohrung (6) oder Hülse (10) ein ringförmiger Steuerwulst (16) angebracht ist, der bei einer Relativbewegung zwischen dieser Hülse (10) und dem Steuerstift (11) gegen die abgewinkelten Flügel (15) der Segmente (13) anläuft und diese bis zu einer tulpenförmigen Öffnung der Formbacken (14) verschwenkt.

5. Druckgußformteil nach dem Anspruch 4, dadurch **gekennzeichnet,** daß der Steuerwulst (16) auf der Seite der Formbacken (14) der Segmente (13) eine Schrägfläche (16a) aufweist, die mit einer Schrägfläche (14a) am inneren Ende der Formbacken (14) zusammenwirkt und bei der Einwärtsbewegung der Segmente (13) die Verkeilung der Formbacken (14) verhindert.

## Claims

1. Diecasting mould section for manufacturing projections, especially nozzles, provided with flanges, beads, threads, undercuts and the like, on a workpiece made of plastics material or of metal, when the projections lie outwith a mould separation plane, comprising segments (13, 29) received in and held together in a bore when in the diecasting condition, with mould jaws (14) forming a mould cavity in this condition, and connected therewith shaft portions (17) and, further connected to the latter, outwardly-angled vanes (15), said segments being pivotably mounted on a central control rod (11) in such a way that , during a relative movement between control rod (11) and bore, they open tulip-fashion, characterised in that the shaft portions (17) of the segments (13, 29) enclose with the vanes (15) an obtuse angle and, in the transitional area between the shaft portions (17) and the vanes (15), there is located the pivotal mounting for the segments (13, 29), comprising an annular bead (19) on the control rod (11) elongated beyond the pivotal mounting, and a corresponding annular groove (18) in the segments (13, 29).

2. Diecasting mould section according to claim 1, characterised in that it is in the form of an additional part insertable into a bore (6) in a mould section (4a), and for this purpose the segments (13, 29) are accommodated in a sleeve (8, 27) which guides them and holds them together.

3. Diecasting mould section according to claims 1 and 2, characterised in that the segments (13) are accommodated in a control sleeve (10) inserted into the sleeve (8).

4. Diecasting mould section according to claims 1 to 3, characterised in that there is mounted in the bore (6) or sleeve (10) accommodating the segments (13) an annular control bead (16) which, upon a relative movement between this sleeve (10) and the control rod (11), impinges against the angled vanes (15) of the segments (13), and pivots them, causing a tulip-like opening movement of the mould jaws (14).

5. Diecasting mould section according to claim 4, characterised in that the control bead (16) has on the side of the mould jaws (14) of the segments (13) an oblique surface (16a), which operates in conjunction with an oblique surface (14a) at the inner end of the mould jaws (14) and, upon the inward movement of the segments (13), prevents wedging of the mould jaws (14).

## Revendications

1. Partie de moule de coulée sous pression pour la fabrication de saillies munies de brides, de bourrelets, de filetages, de contre-dépouilles et similaires, en particulier de tubulures, sur des pièces à usiner en matière plastique ou métal, quand les saillies se trouvent à l'extérieur d'un plan de séparation de moule, partie se composant de segments (13, 29) maintenus ensemble et logés dans un perçage à l'état de coulée sous pression, coquilles de moule (14) formant dans cet état une poche de moule, de parties de tige (17) s'y rattachant et d'ailes (15) coudées vers l'extérieur s'y rattachant, segments qui sont logés sur une barre de commande centrale (11) de manière pivotante de sorte qu'ils s'ouvrent, au cours d'un mouvement relatif entre la barre de commande (11) et le perçage, en forme de tulipe, caractérisée en ce que les parties de tige (17) des segments (13, 29) forment un angle obtus avec les ailes (15) et le centre de pivotement des segments (13, 29) se situe dans la zone de transition entre les parties de tiges (17) et les ailes (15), centre qui se compose d'un bourrelet annulaire (19) sur la bague de commande (11) prolongée au-delà du centre de pivotement et d'une rainure annulaire (18) correspondante dans les segments (13, 29).

2. Partie de moule de coulée sous pression selon la revendication 1, caractérisée en ce qu'elle est conçue comme une partie supplémentaire incorporable dans une partie de moule (4a) pour un perçage (6), et les segments (13, 29) sont logés dans un manchon (8, 27) qui assure leur maintien et leur guidage.

3. Partie de moule de coulée sous pression selon les revendications 1 et 2, caractérisée en ce que les segments (13) sont logés dans un manchon de commande (10) inséré dans un manchon (8).

4. Partie de moule de coulée sous pression selon les revendications 1 à 3, caractérisée en ce que dans le perçage (6) ou le manchon (10) recevant les segments (13), il est disposé un bourrelet de commande (16) de forme annulaire qui vient contre les ailes coudées (15) des segments (13) au cours d'un mouvement relatif entre ce manchon (10) et la barre de commande (11) et qui les bascule en ouvrant les coquilles de moule (14) en forme de tulipe.

5. Partie de moule de coulée sous pression selon la revendication 4, caractérisée en ce que le bourrelet de commande (16) présente, sur la face des coquilles de moule (14) des segments (13), une surface inclinée (16a) qui coopère avec une surface inclinée (14a) à l'extrémité interne de la coquille de moule (14) et empêche, lors du mouvement vers l'avant des segments (13), le coincement des coquilles de moule (14).
